# EUROPEAN PATENT APPLICATION

(11) **EP 1 158 823 A1**
(43) Date of publication of application: **28.11.2001**
(21) Application number: 00110820.8
(22) Date of filing: 22.05.2000
(51) Int. Cl.: H04Q 7/24

(54) **Method for a connection through a core network**

(71) Applicant: TELEFONAKTIEBOLAGET LM ERICSSON (publ), 126 25 Stockholm (SE)
(72) Inventor: Hodges, Phil, 52062 Aachen (DE); Hellwig, Karl, 97539 Wonfurt (DE); Maupin, Alain G., 19146 Sollentuna (SE); Israelsson, Martin, 16341 Spänga (SE); Noguera, Juan, Essendon, VIC 3040 (AU)
(74) Representative: Tonscheidt, Andreas

(57) **Abstract**

In a method for the establishment of a connection between a first access node (RNC1) and a second access node (RNC2), both are connectable to a core network which comprises interconnected core network nodes (CN1, CN2). The first access node (RNC1) initializes the connection (Co) to a first core network node (CN1) according to a framing protocol, wherein a set of parameters for the framing of information sent over the interface between the first access node (RNC1) and the first core network node (CN1) is transmitted to the first core network node (CN1) and the first core network node (CN1) stores the parameter set. The first core network node (CN1) initializes the connection (Co) to a further core network node according to said protocol and the further core network node stores the parameter set. The initialization of the connection (Co) to and the storing of parameters in further core network nodes is performed stepwise until a final core network node (CN2) is reached which is connectable to the second access node (RNC2). The final core network node (CN2) initializes the connection (Co) to the second access node (RNC2) according to said protocol and the second access node (RNC2) stores the parameter set. A core network node and a program unit embodying the invention are also described.

## Description

### Technical field of the invention

The present invention relates to a method according to the preamble of claim 1. Devices and software programs embodying the invention are also described.

### Background

Communication networks can be subdivided into core networks and access networks, the latter providing access to user equipment, for example a wireless access for mobile user equipment to a radio access network. Core networks interconnect access networks and optionally further networks, e.g. the Intemet. In the UMTS architecture, an access network can be controlled by an RNC (radio network controller) which is connected to the core network and provides access to the core network, i.e. serves as access node. In 3GPP (3^{rd} Generation Partnership Project) Technical Specification 3G TS 25.415 V3.2.0, the interface between the access node and a node in the core network is denoted as lu interface. Over the lu interface, connections can be established according to the lu user plane protocol.

RFCIs (radio access bearer subflow combination indicators) are sets of parameters which are generated by an RNC in radio access bearer assignments. They indicate which service data unit formats are valid, for example for use in speech frames or in rate control requests received from the core network, e.g. from an MSC. RFCIs determine the codec mode, especially allowed rates. When a transcoder is inserted into a connection, it receives data frames, e.g. lu frames, and relates the assigned RFCI to a codec mode in order to decode the frames. In the same way it must indicate the RFCI when it sends an encoded frame.

The lu interface as specified in 3GPP Technical Specification 3G TS 25.415 terminates in a core network node, for example in an MSC or in a media gateway controlled by an MSC server, according to the architecture of the core network. In a core network node, the content of data sent over a connection can be changed. Especially, the payload or speech coding can be adapted, for example due to the intervention of supplementary services like DTMF (Dual Tone Multifrequency) tone insertion, supplementary services tone insertion, messages or conference connections of user equipment.

For connections between nodes within the core network, different protocols are possible. Beside the lu user plane protocol, I.366.2 is a protocol defined by the ITU (International Telecommunication Union) as service specific convergence sublayer (SSCS) used on AAL2 (Asynchronous Transfer Mode Adaptation Layer Type 2) for carrying service specific payloads. Especially, it is the framing protocol proposed to be used for carrying compressed voice. This requires the core network node to terminate the lu interface and to establish an AAL2 connection with the required SSCS for the selected speech coding type. A further framing protocol is RTP (Real Time Protocol) which can be carried on an IP transport layer in the core network for transmission of compressed voice of a specified encoding.

A problem with both RTP and I.366.2 is that they are application dependant and also transport layer dependant. If the coding type changes during a connection, a new AAL2 connection or modification must be made with the new SSCS profile. For an IP network, a new RTP profile must be used. This requires unnecessary overhead to carry the profiles with the payload. A further problem with SSCS or RTP is that both are service specific. The protocols require modifications in standardization and implementation for every new service.

In contrast to this, the lu user plane protocol is defined service independent. An lu interface can be connected between two access nodes, e.g. by using BICC (Bearer Independent Call Control) messages to pass the bearer address used in a first access node from a server, e.g. an MSC, controlling it to the server controlling the other access node. In this case it is disadvantageous that there is no control of the user plane. For example, when a handover is necessary or a supplementary service invocation occurs, the lu connection has to be cancelled and a new lu connection must be established which is very inefficient and would degrade the service level. However, for most of the time in a connection, supplementary services or other functions within the connection path are not necessary and hence a virtually direct and transparent connection between access nodes or an access node and a transcoder is advantageous.

The other described framing protocols do not carry the lu user plane parameters. Transcoders are necessary to terminate the lu connection and need to receive the parameters sent by the lu user plane initialization procedure (RFCIs). If another of the above-described framing protocols is used in the core network, the lu user plane protocol is terminated at the first core network node in the connection, e.g. a media gateway. The payload content is then mapped to the other framing protocol. Furthermore, the RFCI initialization must be carried by the other framing protocol and possibly mapped to the actual mode as the framing is codec type specific. At the final core network node in the connection, a transcoder to terminate the lu connection to the access node must then be initialized and the payload content must be mapped back to the lu user plane protocol which requires sufficient processing capacity.

It is also conceivable that parameter sets like RFCIs are transferred from access nodes by out-band procedures, i.e. the core network nodes are provided with parameter sets by a vertical control protocol from servers controlling them. This architecture is customary in a telecommunication system with separate a user plane comprising the core network nodes and a control plane with the servers. Between the servers, the parameter sets can be transferred via the horizontal bearer independent call control (BICC) protocol. The parameter sets can then be transferred to the core network nodes and stored during connection set-up or are only sent when needed to modify a connection. Although this solution allows to establish an lu user plane connection transparently through the core network nodes, it has the disadvantage that it requires a high amount of signaling traffic.

### Summary and description of the invention

It is the object of the present invention to obviate the above disadvantages and provide a simple method for the establishment of an efficient connection through a network, wherein the connection can easily be controlled.

According to the invention, the method described in claim 1 is performed. Furthermore, the invention is embodied in a node as described in claim 11 and a program unit as described in claim 13. Advantageous embodiments are described in the dependant claims.

The proposed method establishes a connection between a first access node and a second access node which are connectable over a core network. An access node can also be a node connecting a further communication network to the core network or a core network node terminating the connection in a transcoder. The core network comprises interconnected core network nodes, for example media gateways or customary mobile services switching centers (MSC). The first access node initializes the connection to a first core network node according to a framing protocol. During the initialization, a set of parameters for the framing of information sent over the interface between the first access node and the first core network node is transmitted to the first core network node. The first core network node stores the parameter set in a memory.

The first core network node then initializes the connection to a further core network node according to said protocol and the further core network node also stores the parameter set. In this way, a stepwise initialization of the connection to further core network nodes and storing of parameters in the further core network nodes is performed until a final core network node is reached which is connectable to the second access node. It is possible that the second core network node is already the final core network node. The final core network node initializes the connection to the second access node according to said framing protocol and the second access node stores the parameter set.

The proposed method is simple and requires a low processing effort in the nodes because no mapping between different framing protocols is necessary. In a simple implementation, the core network nodes transfer the frames without evaluation of the content. However, every core network node can terminate the framing protocol, establish further connections or connections with different parameters and access the data in the frames using the stored parameters. Especially, the connection can be controlled or adapted in every node with low delay and independent of other nodes in the connection. Because only one protocol is used in a connection, there are no problems of adaptation and a fast evolution of services is possible. A virtual transparent connection between access nodes and a transcoder, respectively between access nodes is possible. Preferably the described method is performed in a communication network.

In a preferred embodiment, the core network nodes acknowledge the initialization to the preceding node, i.e. a core network node or an access node. In this way, the initialization is terminated for the preceding node. The acknowledgement is preferably sent before or during the initialization of the connection to a further core network node.

A preferable framing protocol is the lu protocol which can be used inside a core network according to 3GPP specifications to carry payload between core network nodes and to an edge of the network where, for example, the connection is terminated in a transcoder or in a terminating access node, e.g. an RNC. The lu user plane protocol is initialized in every node in the connection that may add a service to the payload.

An advantageous core network node in the connection can insert a function unit into the connection, e.g. break the transcoder free operation of the connection by inserting a transcoder or by inserting a function unit providing a supplementary service. An insertion of supplementary services can occur inside media gateways without an influence on other nodes and links in the connection and is in this way fast and simple to handle.

A preferable core network node can break the connection and initialize a connection segment to a different core network node or access node according to said protocol. In this way, for example a handover of a connection between different access nodes can be performed if the connection is terminated by a mobile user equipment moving in a communication system or the connection can be redirected.

It is proposed that the second access node initializes a reverse connection to the final core network node according to the protocol. A second set of parameters for the framing of information is transmitted, and the initialization is performed stepwise to the first access node, i.e. in the same way as the first connection. It is preferable that both sets of parameters are identical or at least enable a connection according to a common subset of parameters.

It is possible that both access nodes receive a request from control nodes of the core network to establish a connection to the respective other access node. Especially in this case, both sets of parameters can be incompatible, i.e. no common connection parameters can be obtained from the sets although both sets may allow several different connection options. In this case, the processing system of a preferable core network node checks both sets of parameters and inserts a transcoder into the connection which adapts the formats of the frames sent according to the different parameter sets.

Alternatively, if a core network node detects that both sets of parameters are incompatible, it sends a message to a control server for initiating a modification of connection parameters by at least one access node. The modification can be initiated by control messages sent to the respective access node.

The connection between two core network nodes can be established via one or several switches, i.e. nodes in the core network which do not store connection parameters and can not change connection parameters.

If a core network node is adapted to establish connections according to different framing protocols, it preferably checks the framing protocol defined in a request to initialize a connection and selects said framing protocol for the initialization of the connection to a further node. In this way, a mapping between different protocols is avoided while several protocols can be used.

A core network node according to the invention, e.g. an MSC or a media gateway, is interconnected with further core network nodes. It has an interface for receiving an initialization request from an access node or a further core network node to establish a connection according to a framing protocol. A processing system is adapted to extract a set of parameters for the framing protocol from the request and initialize the connection to a further core network node or an access node according to said protocol. The extracted parameter set is stored in a memory. The core network node can preferably perform any steps of the above described methods relating to the core network node.

A program unit according to the invention can be stored on a data carrier or be directly loadable into a core network node. The program unit comprises code for performing the steps of receiving a request to initialize a connection according to a framing protocol, extracting a set of parameters for the framing of information according to said protocol, storing the parameter set, and initializing the connection to a further core network node or an access node according to said protocol. It can preferably perform any steps of the above methods relating to the core network node.

The foregoing and other objects, features and advantages of the present invention will become more apparent in the following detailed description of preferred embodiments as illustrated in the accompanying drawings.

### Brief description of the drawings

- Fig. 1: shows a basic connection establishment according to the invention.
- Fig. 2: shows a connection establishment between two access nodes.
- Fig. 3: shows a redirection of a connection between two access nodes.
- Fig. 4: shows a connection with an inserted transcoder.
- Fig. 5: shows the processing of a connection which is initiated with incompatible parameter sets by the access nodes.

### Detailed description of preferred embodiments of the invention

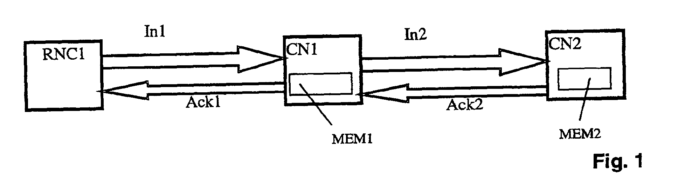

In figure 1 the first steps of the initialization of a connection according to the invention is depicted. The connection is established according to the lu user plane protocol which is terminated in every core network node CN that may require to modify the user connection, for example for a supplementary service intervention. From a first access node RNC1 a message In1 to initialize a connection is sent to a first core network node CN1. In the example the message In1 is an lu initialize packet data unit. A processing system of the first core network node CN1 extracts a set of parameters, especially RFCIs, from the message In1 and stores them in a memory MEM1. The first core network node CN1 sends an acknowledgement Ack1 of the message In1 to the first access node RNC1 and creates a further message In2 comprising the parameter set. Message In2 is sent to a further core network node CN2 which also extracts the parameter set, stores it in a memory MEM2 and sends an acknowledgement Ack2 back to the first core network node. By repeating the initialization stepwise for all nodes in the connection, every node has control of the lu user plane. and service data unit formats passed in the initialization packet data unit.

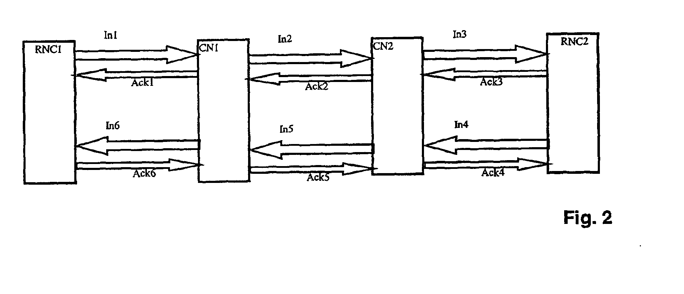

Parameter sets, especially RFCIs, are generated according to customary specifications for communication networks by the access nodes RNC1, RNC2 as soon as a request to set up a connection is received. For a transcoder free operation of a connection there are generally two sets or RFCIs, being initialized from each access node to the other. Alternatively, the messaging from and between servers controlling the core network nodes CN can be adapted to allow only one initialization, e.g. from the first access node RNC1. As shown in figure 2, the second access node RNC2 waits in this case for the initialization from the first access node RNC1 sent stepwise via messages In1, In2, In3 acknowledged by corresponding acknowledgements Ack1, Ack2, Ack3. In the same way, the connection is then initialized backwards with the same set of parameters via messages In4, In5, In6 acknowledged by corresponding acknowledgements Ack4, Ack5, Ack6. In this way, incompatible parameter sets can be avoided.

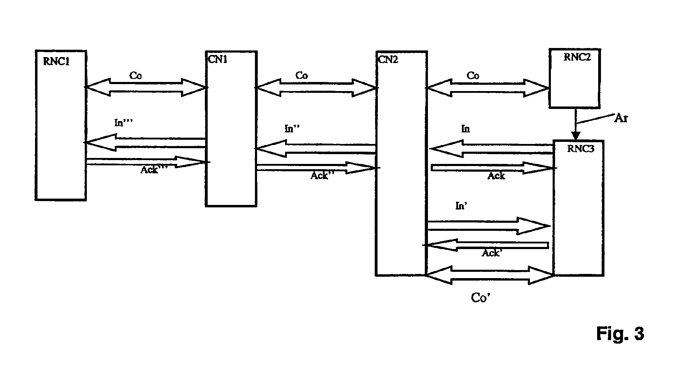

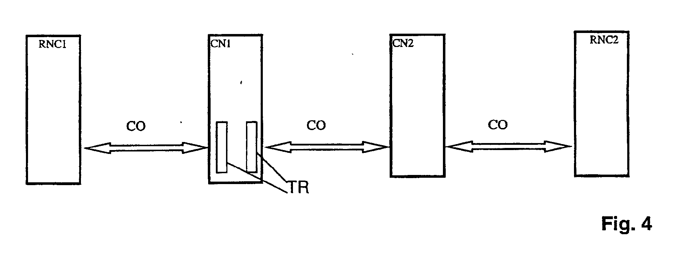

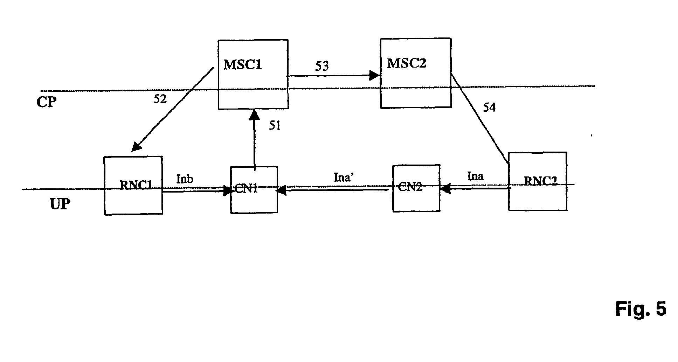

Figure 3 shows an example of a redirection of an established connection Co due to a relocation of the serving access node terminating one end of the connection Co as indicated by arrow Ar. A relocation can for example be necessary when a user moves in the coverage area of a mobile communications network and a handover is performed between radio base stations controlled by different controllers serving also as access nodes RNC2, RNC3. A new radio access bearer is established by access node RNC3 to the core network node CN2, e.g. a media gateway, by performing a new lu user plane initialization with a message In which is acknowledged by acknowledgement Ack the core network node CN2. The core network node CN2 transfers the parameters from message In by stepwise initialization back to the other access node RNC1 as depicted by initialization messages In", In"' with corresponding acknowledgements Ack", Ack"'. The parameters initialized by the first access node RNC1 for the original connection are read from a memory in core network node CN2 and transmitted in initialization messages In' with corresponding acknowledgement Ack' to the new access node RNC3. In this way, a new connection segment Co' can be established in a fast and simple way. Preferably, message In" is only sent if the core network node CN2 detects that the parameter set in message In is compatible to those of the original connection Co. Else procedures as described with respect to figures 4 and 5 can be initiated.

In figure 4, a connection Co between two access nodes RNC1, RNC2 over core network nodes CN1, CN2 is shown with a transcoder TR inserted into the connection. The insertion can be performed at any core network node. The insertion can be performed for example into an ongoing connection to provide a supplementary service or already during the establishment of connection Co if required by incompatible parameter sets sent by the access nodes RNC1, RNC2.

Preferably, the insertion of a transcoder TR is handled within a core network node CN1. Because the necessary parameters for terminating the lu user plane protocol are stored in the core network node CN1, they can be provided to the transcoder TR fast and efficiently. Therefore, transcoder TR can be switched into connection Co with minimum delay in a primed state. Consequently, speech and data frames can be received and transmitted coherently during the insertion improving the in this period connection quality.

In figure 5, the treatment of a mismatch of parameter sets in a communication system with separate user plane UP and control plane CP is described. The user plane UP comprises the core network nodes CN1, CN2 and the access nodes RNC1, RNC2 while several servers MSC1, MSC2 for controlling these nodes CN, RNC are included in the control plane CP. Messages within the control plane CP can for example be transferred according to the BICC protocol, while the lu user plane protocol is suitable for messages within the user plane UP.

In the example both access nodes RNC1, RNC2 have received from the respective servers MSC1, MSC2 a message to initiate a connection with a specific codec type. Accordingly, access node RNC1 begins to initialize a connection with a message Inb while access node RNC2 begins to initialize a connection with messages Ina, Ina'. The corresponding acknowledgements are not shown to simplify the figure. It is possible, that the access nodes RNC1, RNC2 select different active codec sets for the initialization messages Ina, Inb which are incompatible.

Preferably, every core network node or specified core network nodes in the connection, e.g. media gateways connected to access nodes, compare the parameter sets received in the different initialization messages Ina', Inb. If a core network node CN1 determines that there is no match of supported modes - i.e. both access nodes RNC initialize separate modes without a common mode - the core network node CN1 in one embodiment of the invention automatically inserts transcoders to allow the successful establishment of the connection. In this case, the transcoders in the core network node CN1 terminate two connections to the respective access nodes RNC1, RNC2. The initialization of the reverse connections is then started from core network node CN1 with an initialization messages containing the parameter set of message Inb towards access node RNC1 and with an initialization messages containing the parameter set of message Ina' towards access node RNC2.

The alternative embodiment depicted in figure 5 allows to establish a transparent connection without transcoders if a common mode is possible for both access nodes RNC. In this case, core network node CN1 sends a message 51 to the controlling server MSC1, that the RFCI sets received in both messages Inb, Ina' are incompatible. Message 51 can for example be sent over an H.248 interface. Due to stored or requested capability information about the access nodes, the server MSC1 can then decide whether it is necessary to modify the connection by sending back a message to the core network node CN1 to insert transcoders.

If, however, both access nodes RNC1, RNC2 are adapted to establish a connection with a common mode, messages 53 for determining a corresponding mode can be sent to the servers controlling the access nodes RNC1, RNC2. The servers MSC1, MSC2 can then send messages 52, 54 to the respective access nodes RNC1, RNC2 to activate said mode and repeat the initialization with new messages Ina, Inb. Messages 52, 54 can for example be RANAP (Radio Access Network Application Protocol) messages.

If different framing protocols are supported in the core network it is proposed that they are also negotiated in the control plane CP along with the codec types and bearer connection characteristics. In this case, one framing protocol, e.g. lu user plane, can be requested as the preferred framing type, especially from a 3G access node. This provides the opportunity to use lu user plane framing end to end if a connection transits a network supporting different framing protocols and then again terminates in a 3G network. Compressed speech can then be conveyed through the core network without mapping between different framing protocols. Further, any services can be supported in every core network node after it has terminated the lu user plane protocol. It can then insert a transcoder without requiring a new User Plane initialization or radio access bearer re-establishment. Finally, if multiple framing protocols are used in a connection, the stepwise initialization of the RFCIs can also be adopted for these protocols.

The above embodiments admirably achieve the objects of the invention. However, it will be appreciated that departures can be made by those skilled in the art without departing from the scope of the invention which is limited only by the claims.

## Claims

1. Method for the establishment of a connection between a first access node (RNC1) and a second access node (RNC2) which are connectable to a core network, wherein the core network comprises interconnected core network nodes (CN1, CN2), **characterized in that**
the first access node (RNC1) initializes the connection (Co) to a first core network node (CN1) according to a framing protocol, wherein a set of parameters for the framing of information sent over the interface between the first access node (RNC1) and the first core network node (CN1) is transmitted to the first core network node (CN1),
the first core network node (CN1) stores the parameter set,
the first core network node (CN1) initializes the connection (Co) to a further core network node according to said protocol,
the further core network node stores the parameter set,
stepwise initialization of the connection (Co) to and storing of parameters in further core network nodes until a final core network node (CN2) is reached which is connectable to the second access node (RNC2),
the final core network node (CN2) initializes the connection (Co) to the second access node (RNC2) according to said protocol and the second access node (RNC2) stores the parameter set.

2. Method according to claim 1, wherein a core network node (CN1, CN2) acknowledges the initialization to a preceding node (CN1, CN2, RNC1).

3. Method according to claim 1 or 2, wherein the framing protocol is the lu protocol.

4. Method according to any preceding claim, wherein a core network node (CN1, CN2) in the connection (Co) inserts a function unit into the connection (Co).

5. Method according to any preceding claim, wherein a core network node (CN1, CN2) in the connection (Co) breaks the connection (Co) and initializes a connection segment (Co') to a different core network node or access node (RNC3) according to said protocol.

6. Method according to any preceding claim, wherein the second access node (RNC2) initializes a reverse connection (Co) to the final core network node (CN2) according to the protocol, wherein a second set of parameters for the framing of information is transmitted, and the initialization is performed stepwise to the first access node (RNC1).

7. Method according to claim 6, wherein both sets of parameters are incompatible and a core network node (CN1, CN2) inserts a transcoder (TR) into the connection (Co).

8. Method according to claim 6, wherein both sets of parameters are incompatible and a core network node (CN1, CN2) sends a message to a control server (MSC1, MSC2) for initiating a modification of connection (Co) parameters by at least one access node (RNC1, RNC2).

9. Method according to any preceding claim, wherein the connection (Co) between two core network nodes (CN1, CN2) is established via a switch.

10. Method according to any preceding claim, wherein a core network node (CN1, CN2) is adapted to establish connections according to different framing protocols, checks the framing protocol defined in a request to initialize a connection (Co) and selects said framing protocol for the initialization of the connection (Co) to a further node (CN1, CN2, RNC1, RNC2).

11. Core network node in a communication network, wherein said node is interconnected with further core network nodes (CN1, CN2), and comprises
- an interface for receiving an initialization request from an access node (RNC1) or a further core network node (CN1, CN2) to establish a connection (Co) according to a framing protocol,
- a processing system to extract a set of parameters for the framing protocol from the request and initialize the connection (Co) to a further core network node (CN1, CN2) or an access node (RNC1, RNC2) according to said protocol
- and a memory (MEM) for storing the extracted parameter set.

12. Core network node according to claim 11, wherein the core network node is adapted to perform a method according to any of the claims 2 to 10.

13. Program unit on a data carrier or loadable into a core network node, said program unit comprising code for performing the steps of
receiving a request to initialize a connection (Co) according to a framing protocol,
extracting a set of parameters for the framing of information according to said protocol,
storing the parameter set,
and initializing the connection (Co) to a further core network node (CN1, CN2) or an access node (RNC1, RNC2) according to said protocol.

14. Program unit according to claim 13, wherein said program unit comprises code for performing any steps of a method according to any of the claims 2 to 10.
